## Europäisches Patentamt
## European Patent Office
## Office européen des brevets

(19)

(11) Numéro de publication: **0 090 734**
**B1**

(12)

# FASCICULE DE BREVET EUROPEEN

(45) Date de publication du fascicule du brevet:
**09.04.86**

(51) Int. Cl.⁴: **A 23 L 2/30**

(21) Numéro de dépôt: **83400625.6**

(22) Date de dépôt: **25.03.83**

(54) Procédé pour la clarification de boissons.

(30) Priorité: **26.03.82 CA 399463**

(43) Date de publication de la demande:
**05.10.83 Bulletin 83/40**

(45) Mention de la délivrance du brevet:
**09.04.86 Bulletin 86/15**

(84) Etats contractants désignés:
**AT CH DE FR GB IT LI NL**

(56) Documents cités:
**AT - B - 336 526**
**DE - A - 2 818 990**
**FR - A - 2 143 201**
**US - A - 4 094 783**
**US - A - 4 288 551**

**Handbuch der Lebensmittelchemie, Bd. V/2. Teil, p. 184**

(73) Titulaire: **A. LASSONDE & FILS INC. Société dite:,
170, 5ème Avenue, Rougemont Québec JOL 1MO (CA)**

(72) Inventeur: **Dumont, Yves, 4938 Circle Road, Montreal
Quebec H3W 1Z7 (CA)**

(74) Mandataire: **Jolly, Jean-Pierre et al, Cabinet BROT et
JOLLY 83, rue d'Amsterdam, F-75008 Paris (FR)**

## Description

La présente invention se rapporte à un procédé pour la clarification des jus de fruits, autres que des agrumes, en vue, notamment, de maintenir dans ceux-ci une partie au moins des pectines qu'ils contiennent.

Art antérieur

Schématiquement, les jus de fruits autres que les jus d'agrumes, le jus de pommes ou de raisins par exemple, sont extraits du fruit au moyen d'un système de pressurage qui donne un jus initial (ou moût) contenant une certaine quantité de particules ou composantes indésirables ou néfastes à sa bonne stabilité.

Les particules de grosse taille, pépins, particules de fruit, etc. sont habituellement retenues mécaniquement par les mailles d'un tamis ou la tôle perforée d'une raffineuse. Ensuite, le moût doit subir un traitement de clarification qui le rendra limpide et donc apte à la commercialisation comme jus ou sous forme de concentré.

La clarification a toujours été un gros point noir dans la production de jus et, plus particulièrement dans la production de jus de pommes. Dans le procédé classique, à la sortie des pressoirs, le jus exprimé du fruit, même après avoir été tamisé, contient encore de fines particules de pulpe qui le rendent opaque. Ces particules sont maintenues en suspension dans le moût par de la pectine en solution. Cette pectine confère au produit une certaine viscosité et agit comme colloïde protecteur qui rendra toute sédimentation ou filtration très difficile. Certaines étapes sont donc indispensables pour obtenir un jus limpide, à savoir;

a) un traitement enzymatique d'une durée de deux (2) à trois (3) heures, qui a pour but de réduire la viscosité du milieu en éliminant la pectine;

b) un acollage, qui dure plusieurs heures et qui a pour but de produire une floculation des suspensions et de les rassembler en particules suffisamment importantes pour accélérer l'action naturelle de la pesanteur (précipité floculent); et

c) une opération de séparation des solides ainsi rassemblés en particules, par sédimentation naturelle, par filtration sur plaque ou tambour rotatif, avec addition d'agents filtrants ou de terre diatomée, ou par centrifugation.

Ces opérations peuvent s'effectuer à froid ou à chaud, cette dernière technique accélérant les réactions, mais pouvant difficilement les réduire à moins de deux (2) heures. De plus, cette dernière technique peut, dans bien des cas, affecter la qualité du produit final.

D'autres procédés emploient une méthode de clarification basée sur un réchauffement éclair à des températures pouvant atteindre 82°C ou 85°C. Le jus est ensuite refroidi et doit subir les opérations de séparation des solides précitées. En plus d'avoir les désavantages mentionnés ci-dessus, ce procédé comporte un désavantage additionnel, en ce que cette méthode assujettit le jus à deux traitements. En effet, après le réchauffement éclair et la clarification, il est nécessaire de pasteuriser le jus, avant de le placer dans des contenants destinés aux consommateurs. Ces réchauffements peuvent avoir des effets délétères importants sur la saveur du produit fini.

Plus récemment, on a mis au point une technique d'ultra-filtration du jus de pommes qui permet de retenir les pectines et les matières insolubles sans opération de collage. Cependant, cette, technique, bien que se réalisant en continu, présente certains inconvénients en ce qui concerne la rétention des arômes, le colmatage et la longévité des membranes servant aux opérations.

Finalement, il est souvent nécessaire de procéder à une filtration-polissage du jus moût débourbé, afin de lui enlever le dernier trouble subsistant. Les différents types de filtres pouvant être utilisés à ces fins sont très bien connus. Certains sont des paniers à mailles très fines, d'autres utilisent une plaque carton/amiante. On emploie aussi des toiles ou tissus métalliques sur lesquels l'on dispose une précouche filtrante constituée de cellulose, bentonite ou autres produits, qui se collent sur la toile ou le tissu métallique, tout en laissant passer le jus ou le moût en le modifiant le moins possible.

Les procédés traditionnels comportent le désavantage majeur d'être discontinus. En effet, les étapes de dépectinisation, de coagulation et de sédimentation exigent le maintien du jus au repos pour une période pouvant atteindre 7 ou 8 heures. De plus, la durée de cette période de repos peut varier considérablement d'un lot à l'autre.

Même les "nouveaux" procédés permettant une floculation dite "rapide" prennent plus de deux heures.

Bien que la flottation soit déjà connue et utilisée dans les procédés de traitement des eaux usées, ce procédé a toujours été à peu près complètement ignoré par les producteurs de jus de fruits.

Diverses tentatives de mise au point d'un système plus efficace ont déjà eu lieu, mais ont abouti jusqu'à présent à des échecs en ce qui a trait à la production d'un jus de qualité commerciale. Les quelques publications suivantes indiquent la nature de certains travaux entrepris:

CALVES Janine, BARON A., DRILLEAU J. F., 1977. Description des principaux facteurs intervenant dans la défécation des moûts de pommes. C.R. Acad. Agric., 63, 1196—1203.

VIJAYALAKSMI M., PICQUE D., SEGARD E., BROUN G., DRILLEAU J. F., BARON A., CALVEZ Janine, 1978. Clarification des jus de pommes par les enzymes pectinolytiques. CR fin d'étude de contrat DGRST no 77 7.0585 et 77 7.0586, action concertée "Technologie Alimentaire et Agricole".

TRESSLER et JOSLYN, 1971. Fruit and Vegetable juice processing technology. A.V.I.

DUPAIGNE, P., 1972. Les boissons de fruits. P.U.F.

Jackson, brevet américain 4 094 783, suggère un séparateur de liquides contaminés employant une combinaison des effets centrifuges et de flottation. Ce procédé n'est pas destiné à la production de jus ou autres boissons et comporte certains désavantages importants, à savoir : il nécessite un récipient fermé et requiert qu'un mouvement assez vigoureux soit imprimé au liquide. Ce procédé n'est pas applicable à la clarification en continu des jus de fruits parce que, dans ces cas, le floc formé est particulièrement délicat et serait détruit par la turbulence excessive à l'entrée du jet de liquide à traiter dans le récipient.

Greene, dans son brevet américain 4 162 972, suggère un procédé de clarification applicable à des jus de fruits. Le procédé suggéré par Greene est fondé sur la formation d'une mousse et d'un floc dans une chambre et la flottation du floc dans une seconde chambre. Ce procédé est peu intéressant à cause de la nécessité des deux chambres et la transfert du jus de la première chambre à la deuxième chambre risque fort de détruire le floc. De plus, les grosses bulles nécessaires à la production d'une mousse diminuent considérablement l'efficacité du système.

Les documents US—A—4 288 551 et FR—A—2 143 201 concernent le traitement de jus tels que jus brut obtenu à partir de canne à sucre ou de betteraves sucrières et jus sucré du genre "sugar syrup". US—A—4 288 551 fait appel à l'oxygène (gaz non inerte) pour la flottation du floc et FR—A—2 143 201 utilise des bulles d'air dont le dimension n'est pas contrôlée.

Description de l'invention

La présente invention consiste en un procédé pour la clarification en continu et à la température ambiante d'un jus de fruits frais autres que des agrumes, en vue de maintenir dans ce jus une partie au moins des pectines qu'il contient, ce procédé étant caractérisé en ce qu'il comprend les phases successives suivantes:

a) l'addition dans ledit jus de fruits d'un coagulant connu en soi, en vue de la formation rapide d'un floc;

b) l'introduction en continu du jus de fruits ainsi traité dans un bassin de flottation dans lequel est introduit simultanément sous forme de micro-bulles un gaz inerte vis-à-vis dudit jus de fruits et apte à entraîner vers la surface les particules du floc formé;

c) l'évacuation en continu des particules de floc rassemblées à la surface dudit bassin et la récupération en continu à partir de celui-ci du jus de fruits clarifié.

Contrairement à la technique classique (dépectinisation, floculation et sédimentation), la présente invention permet de supprimer, si désiré, la première étape et donc de garder au jus ses pectines tout en le rendant clair et limpide. Ceci présente un intérêt important, puisqu'il est maintenant reconnu que les jus pectinisés laissent dans la bouche des consommateurs une impression agréable de plus grande onctuosité et qu'un marché très important s'ouvre dans cette direction.

La présente invention permet également une diminution importante de la quantité de jus contenu dans les boues. Dans le cas du jus de pommes, cette diminution est de l'ordre de 50% par rapport au procédé classique comportant une étape de sedimentation.

Description des dessins

Les caractéristiques et avantages de l'invention ressortiront de la description qui va suivre, faite en référence aux figures suivantes:

La figure 1 est un schéma montrant le procédé de fabrication de jus de pommes à partir de la pomme jusqu'au produit fini;

La figure 2 est une représentation schématique d'un flottateur utilisable en liaison avec lé procédé.

Description de certaines formes de mises en oeuvre

Il est bien précisé qu'il s'agit uniquement d'exemples et que toutes autres formes, proportions et dispositions pourront être adoptées sans sortir du cadre de l'invention. L'exemple traité se rapporte au cas de la clarification de jus de pommes, mais l'invention n'est évidemment pas restreinte à cet exemple et est applicable à la clarification d'autres jus de fruits frais obtenus à partir de fruits autres que des agrumes, par exemple, raisins, poires, canneberges, (baies comestibles de la famille des éricacées), bleuets (myrtilles) etc. . . . .

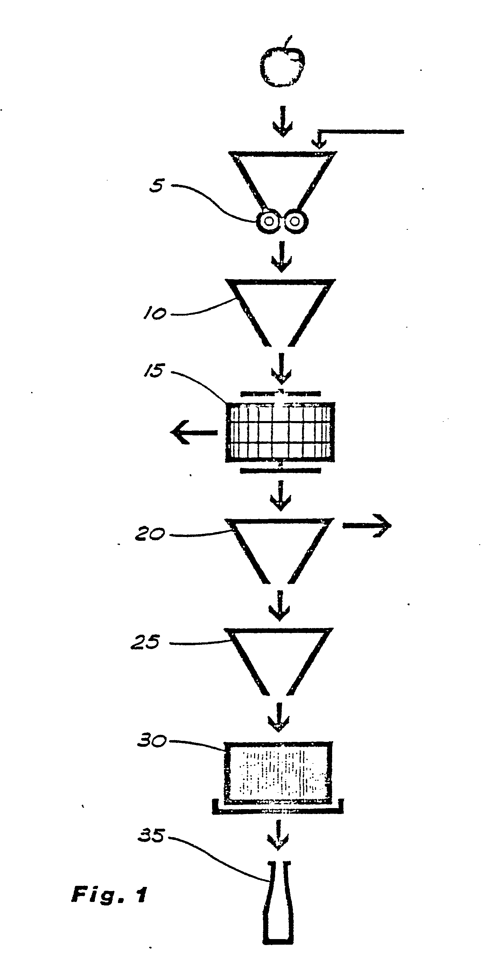

L'on peut voir à la figure 1 que les pommes, après avoir été lavées, sont broyées dans un broyeur 5 et une râpe 10. Les pommes broyées sont ensuite introduites dans un pressoir 15, qui produit un jus initial qui est lui-même introduit dans le clarificateur ou flottateur 20.

A sa sortie du flottateur 20, le jus peut, si désiré, être dépectinisé dans un réservoir tampon 25, pour ensuite être filtré dans des filtres de types connus 30 et conditionné en 35.

Il est possible de traiter les boues produites lors de la flottation, afin d'y récupérer le jus qui peut y être contenu. Ce procédé ne fait cependant pas l'objet de la présente invention.

Une fois le démarrage complété, tel que décrit plus bas, de la bentonite est injectée en 82 et de la gélatine est injectée en 84 au moût enzymé, auquel une certaine quantité de tanin peut avoir été ajoutée. Le mélange contenant les coagulants, après une rétention de quelques minutes dans le coagulateur 90, est acheminé à l'entrée 110 du pot d'injection 170 du flottateur 100. Le jus clarifié s'accumule dans la chambre 130 du flottateur 100 et est acheminé, selon le cas, à un poste de conditionnement ou de filtration par la sortie 138. Une partie du jus clarifié venant de la sortie 135 de la chambre 130 est introduit dans une chambre de pressurisation 140 qui sert à saturer de gaz le jus clarifié qui y est introduit. Il va sans dire que le gaz choisi ne doit pas affecter de manière inacceptable la qualité du jus clarifié. Ce jus saturé de gaz est réintroduit dans le pot d'injection 170 en 160 après avoir passé par une ou plusieurs valves de détente 150. Bien que la description de la présente incarnation se réfère à la pressurisation d'un gaz dans du jus clarifié, cette pressurisation peut également se faire dans le jus non traité, dans un mélange de jus clarifié et de jus coagulé ou même dans de l'eau, si la dilution en résultant n'entraîne pas de conséquences inacceptables.

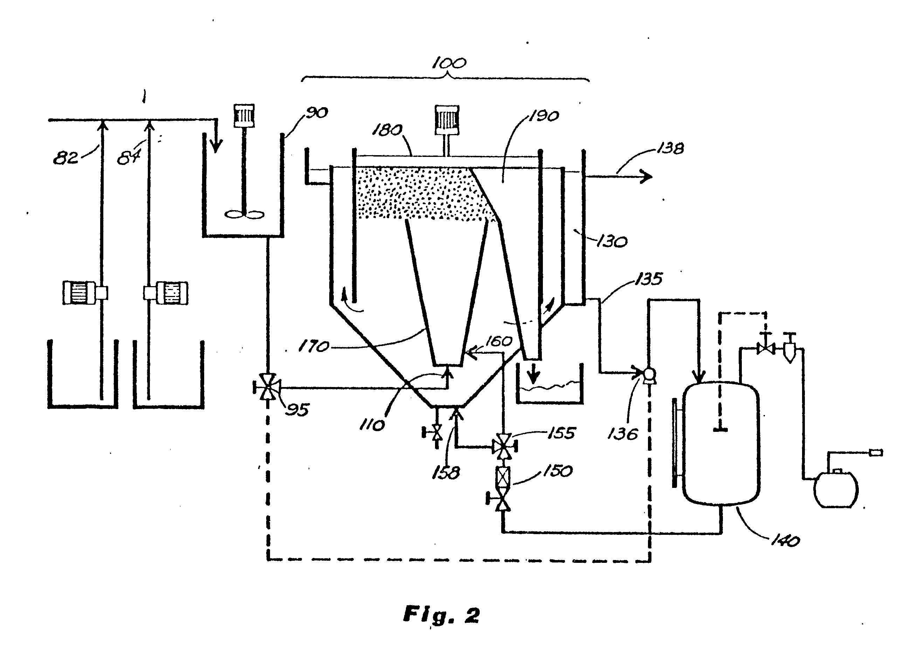

Donc, comme l'on peut le voir à la figure 2, le moût à traiter est introduit verticalement au fond du pot d'injection 170 en son centre. Le jus clarifié saturé de gaz est réintroduit dans le flottateur 100 horizontalement à proximité du pot 170 et suivant une direction excentrée non tangentielle. Un floc se forme et/ou se reforme alors dans le moût. Ce floc est entraîné vers la surface par les micro-bulles qui se forment lors de la détente du gaz dans le jus clarifié recirculé. Il est très important de contrôler le diamètre des micro-bulles, puisque les "grosses" bulles perturbent le système et diminuent considérablement l'efficacité du procédé.

Le floc se dirige donc vers la surface où il est râclé par un râcloir 180, qui l'entraîne vers la sortie 190. L'on peut alors soit disposer de ces boues ou les traiter de façon à réacupérer le jus qu'elles contiennent.

Pour démarrer le procédé, on ajuste la valve 95 de manière à ce que la totalité du jus coagulé à traiter se dirige directement vers la valve 136, qui est elle-même ajustée de manière à ce que la totalité du jus coagulé à traiter passe par la chambre de pressurisation 140 dans laquelle le jus est saturé de gaz. Le jus coagulé et saturé de gaz passe par la ou les valves de détente 150. La valve 155 est ajustée de manière à ce que la totalité du jus coagulé saturé de gaz soit introduite par l'entrée 158 sise au fond du flottateur 100.

Lorsque le jus commence à s'accumuler dans la chambre 130, les valves 95, 136 et 155 sont simultanément ajustées, de manière à ce que le trajet normal soit établi.

Un dispositif utilisable avec le procédé faisant l'objet de la présente invention est décrit dans le brevet canadien 988 226.

### Exemple

Pour un débit de 50 hl/heure, l'on injecte dans un moût de pommes de la région de Rougemont, au Québec, contenant déjà des enzymes, par exemple, 0,5 g/hl d'enzymes vendues sous la marque IRGAZYME 100, une solution d'acide tanique, 1,5% (P/V) au rythme de 0,5 litre par minute, une solution de gélatine 1,5% (P/V) au rythme de 0,4 à 0,6 litre par minute. Une fois le procédé démarré, tel que décrit ci-dessus, le mélange est ensuite introduit, en continu, dans un coagulateur d'une capacité de 250 litres avec agitation continuelle, donnant un temps de retenue de quelques minutes. Le niveau dans le coagulateur est maintenu approximativement à la moitié pendant quae le tout est agité à une vitesse approximative de 40 tours/minute. On introduit également dans le coagulateur une injection de bentonite 1,5% (P/V) au rythme de 0,2 à 0,4 litre/minute. Il est nécessaire d'optimiser les dosages de tanin, de gélatine et de bentonite, afin de former rapidement un floc apte à la flottation.

Le moût coagulé est ensuite introduit dans un flottateur similaire à celui montré à la figure 2 en 100, d'une capacité de 12,5 hl. Le moût à traiter est ensuite introduit verticalement au fond du pot d'injection situé au centre du flottateur. Du jus clarifiè est récupéré à la sortie du flottateur et est additionné d'azote sous une pression pouvant varier de 207 à 690 kPa (2,11 à 7.03 kg/cm$^2$) et est réintroduit horizontalement à un débit compris entre 15 hl/heure et 50 hl/heure et suivant une direction excentrée par rapport au flot de jus brut à traiter. Un floc se forme et/ou se reforme dans le pot d'injection et est entraîné vers la surface du flottateur par des micro-bulles, qui se forment dans le pot d'injection en même temps que le floc.

## Revendications

1. Procédé pour la clarification en continu et à la température ambiante d'un jus de fruits frais autres que des agrumes, en vue de maintenir dans ce jus une partie au moins des pectines qu'il contient, ce procédé étant caractérisé en ce qu'il comprend les phases successives suivantes:

a) l'addition dans ledit jus de fruits d'un coagulant connu en soi, en vue de la formation rapide d'un floc;

b) l'introduction en continu du jus de fruits ainsi traité dans un bassin de flottation dans lequel est introduit simultanément sous forme de micro-bulles un gaz inerte vis-à-vis dudit jus de fruits et apte à entraîner vers la surface les particules du floc formé;

c) l'évacuation en continu des particules de floc rassemblées à la surface dudit bassin et la récuparation en continu à partir de celui-ci du jus de fruits clarifié.

2. Procédé selon la revendication 1, caractérisé en ce que, pour démarrer le procédé, ledit gaz est injecté sous pression dans ledit jus de fruits avant introduction de celui-ci dans ledit bassin de flottation.

3. Procédé selon la revendication 1, caractérisé en ce qu'une partie du jus de fruits clarifié est recyclée audit bassin de flottation et en ce que ledit gaz est injecté sous pression dans le jus recyclé avant son introduction dans ledit bassin.

## Patentansprüche

1. Verfahren zur kontinuierlichen Klärung eines frischen, nicht von Zitrusfrüchten stammenden Fruchtsaftes bei Raumtemperatur im Hinblick auf die Erhaltung wenigstens eines Teiles der in diesem Fruchtsaft enthaltenen Pektine, wobei dieses Verfahren dadurch gekennzeichnet ist, daß es die folgenden aufenanderfolgenden Schritte umfaßt:

a) Zugabe eines an sich bekannten Koagulierungsmittels zum Fruchtsaft im Hinblick auf die rasche Bildung eines Koagulates;

b) kontinuierliches Einbringen des so behandelten Fruchtsaftes in ein Flotationsbecken, in welches gleichzeitig ein zur Mitnahme der Teilchen des gebildeten Koagulates zur Oberfläche geeignetes Inertgas in Form von Mikrobläschen gegenüber dem Fruchtsaft eingebracht wird;

c) kontinuierliches Abscheiden der sich an der Oberfläche des Beckens ansammelnden Teilchen des Koagulates und kontinuierliche Gewinnung des geklärten Frichtsaftes aus diesem.

2. Verfahren nach Anspruch 1, dadurch gekennzeichnet, daß das Gas zum Starten des Verfahrens vor Einbringen des Fruchtsaftes in das Flotationsbecken unter Druck in den Fruchtsaft eingepreßt wird.

3. Verfahren nach Anspruch 1, dadurch gekennzeichnet, daß ein Teil des geklärten Fruchtsaftes zum Flotationsbecken rückgeführt wird und daß das Gas unter Druck in den rückgeführten Fruchtsaft vor dessen Einbringden in das Becken eingepreßt wird.

## Claims

1. A process for continuous clarification at ambient temperature a juice of fresh fruits other than citrus for maintaining in said juice a portion at least of the pectins that it contains, said process being characterised in that it comprises the following successive phases:

a) the addition to said fruit juice of a per se known coagulant for rapid formation of a floc;

b) continuous introduction of the fruit juice treated in that way into a flotation bowl into which a gas is simultaneously introduced in the form of micro-bubbles, said gas being inert with respect to said fruit juice and being capable of entraining the particles of the floc formed towards the surface;

c) continuous removal of the particles of floc which collect at the surface of said bowl and continuous recovery therefrom of the clarified fruit juice.

2. A process according to claim 1 characterised in that, to start the process, said gas is injected under pressure into said fruit juice before same is introduced into said flotation bowl.

3. A process according to claim 1 characterised in that a portion of the clarified fruit juice is recycled to said flotation bowl and that said gas is injected under pressure into the recycled juice before it is introduced into said bowl.

**Fig. 1**

**Fig. 2**